# EUROPÄISCHE PATENTSCHRIFT

(11) **EP 3 400 203 B1**
(45) Veröffentlichungstag und Bekanntmachung des Hinweises auf die Patenterteilung: **01.04.2020**
(21) Anmeldenummer: 16763717.2
(22) Anmeldetag: 29.07.2016
(51) Int. Cl.: C04B 35/01, C04B 35/04, C04B 35/10, C04B 35/103, C04B 35/626, C04B 35/63, C04B 35/632, C04B 35/66

(54) **FEUERFESTE FORMKÖRPER UND MASSEN SOWIE BINDEMITTEL UND VERFAHREN ZU DEREN HERSTELLUNG**
REFRACTORY SHAPED BODIES AND MASSES AS WELL AS BINDERS AND THE PRODUCTION THEREOF
PRODUITS RÉFRACTAIRES FACONNES ET NON FACONNES AINSI QUE LIANTS ET LA PRODUCTION DE CELUI-CI

(30) Priorität: 04.01.2016 DE 102016100083
(43) Veröffentlichungstag der Anmeldung: 14.11.2018
(73) Patentinhaber: Refractory Intellectual Property GmbH & Co. KG, 1100 Wien (AT)
(72) Erfinder: GUEGUEN, Erwan, 1494 Villers La Ville (BE); ANEZIRIS, Christos G., 09599 Freiberg (DE); BIERMANN, Christiane, 09599 Freiberg (DE)
(74) Vertreter: Köchling, Conrad-Joachim
(86) Internationale Anmeldenummer: PCT/DE2016/100348
(87) Internationale Veröffentlichungsnummer: WO 2017/118449

(56) Entgegenhaltungen:
- EP-A1- 2 740 768

## Beschreibung

Die Erfindung betrifft eine Masse zur Herstellung von feuerfesten Formkörpern, enthaltend ein Gemenge aus einem feuerfesten oder hochtemperaturfesten anorganischen Pulver, Körnern und/oder Granulat sowie einem Bindemittel, vorzugsweise unter Zusatz einer rieselfähigen Masse oder eines Pulvers aus Kohlenstoff.

Des Weiteren betrifft die Erfindung ein Bindemittel zur Herstellung feuerfester Massen oder Formkörper für solche Massen sowie Formkörper, die aus solchen Massen mit Bindemittel hergestellt sind. Schließlich betrifft die Erfindung ein Verfahren zur Herstellung von feuerfesten oder hochtemperaturfesten Formkörpern oder Massen aus einem hochtemperaturfesten oder feuerfesten anorganischen Pulver, Körnern und/oder Granulat und einem Bindemittel.

Kohlenstoffgebunde, graphithaltige Erzeugnisse finden einen breiten Einsatz als Auskleidung in metallurgischen Gefäßen, wie zum Beispiel als kohlenstoffgebundene Magnesiasteine im Konverter oder als Schlüsselbauteile, zum Beispiel Tauchausgüsse oder Schieberplatten oder Stopfen oder Gießrinnen im Stranggussbereich. Kohlenstoffgebundene, feuerfeste Erzeugnisse werden weiterhin im Hochofenbereich, in Transportgefäßen wie zum Beispiel Pfannen oder in der chemischen Industrie oder in der Müllverbrennungsindustrie als hochtemperaturfeste Rohre, oder in der Zementindustrie als Auskleidungsmaterial eingesetzt.

Als Binder dienen hier vorzugsweise reine Phenolharze, wie zum Beispiel Resole oder Novolake, Kunstpeche, wie zum Beispiel Carbores oder Steinkohlepeche. Zur Optimierung der Oxidationsbeständigkeit von phenolhaltigen, kohlenstoffgebundenen Erzeugnissen werden überwiegend metallische Additive, wie zum Beispiel Si oder Al oder Mg eingesetzt. In der DE 199 54 893 A1 werden kohlenstoffgebundene Erzeugnisse mit verbesserten Oxidationsverhalten präsentiert. Über die Zugabe einer katalytisch aktiven Substanz aus der Gruppe der leicht reduzierbaren Verbindungen der Übergangselemente, insbesondere Metallocene oder Metallobenzoate oder Metallonaphtenate des Kupfers, des Chroms, des Nickels oder des Eisens in die Kunstharzkomponente wird unter 1000 °C ein Kristallin hochgraphisierter Kohlenstoff erzeugt, der zu verbesserten chemischen Eigenschaften verhilft.

Die bekannten Bindemittelsysteme weisen enorme Probleme hinsichtlich ihrer Umweltfreundlichkeit und Arbeitssicherheit auf, entweder über freie Phenolanteile im Falle der Harze oder über ihren Benzo[a]pyren-Gehalt im Falle der pechstämmigen Bindemittel.

Ausgehend von diesem Stand der Technik liegt der Erfindung die Aufgabe zugrunde, umweltfreundliche, feuerfeste, vorzugsweise kohlenstoffgebundene, graphithaltige Formkörper und Massen aus fein- und grobkörnigen anorganischen Rohstoffen mit oder ohne weitere Kohlenstoffzusätze auf der Basis von umweltfreundlichen Bindemitteln zu schaffen, die sehr gute mechanische, thermomechanische und chemische Eigenschaften für Anwendungstemperaturen im Temperaturbereich von 500 °C bis 2000 °C aufweisen.

Als feinkörnige, anorganische Rohstoffe werden natürliche oder synthetische Rohstoffe mit einer Korngröße </= 100 µm, als grobkörnige anorganische Rohstoffe werden natürliche oder synthetische Rohstoffe mit einer Korngröße >100 µm bezeichnet.

Der Erfindung liegt ferner die Aufgabe zugrunde, ein umweltfreundliches Bindemittelsystem für feuerfeste Erzeugnisse mit oder ohne Kohlenstoffzusätze bereitzustellen, welches den Festigkeitsanforderungen in Kombination mit niedrigen Porositäten für ausreichende Oxidations- und Korrosionsbeständigkeit entspricht.

Zur Lösung dieser Aufgabe schlägt die Erfindung gemäß Anspruch 1 vor, dass das Bindemittel eine Kombination von Tannin, Laktose, feinkörnigem Siliziumdioxid und Aluminiumpulver enthält.

Vorzugsweise ist vorgesehen, dass das Gemenge eine rieselfähige Masse oder ein Pulver aus Kohlenstoff enthält.

Ferner stellt die Erfindung gemäß Anspruch 3 ein Bindemittel zur Herstellung entsprechender Massen oder Formkörper zur Verfügung, wobei das Bindemittel eine Kombination von Tannin, Laktose, feinkörnigem Siliziumdioxid und Aluminiumpulver enthält.

Vorzugsweise ist dabei das Verhältnis von Laktose zu Tannin zwischen 0,1 und 0,3.

Des Weiteren ist bei dem Bindemittel bevorzugt vorgesehen, dass das feinkörnige Siliziumdioxid eine Korngröße <50 µm, vorzugsweise <1 µm, hat und das Aluminiumpulver eine Korngrößer <200 µm hat.

Auch schlägt die Erfindung vor, dass dem Bindemittel Phenolharz in Pulverform bis zu 30 Gew.% bezogen auf die Mischung aus Laktose und Tannin zugegeben ist.

Auch schlägt die Erfindung vor, dass dem Bindemittel weitere feinkörnige Additive zugesetzt sind, nämlich Magnesium oder Carbide, insbesondere SiC, B₄C, TiC oder Nitride, insbesondere Si₃N₄, AIN, TiN oder Boride insbesondere BN, TiB₂.

Auch kann bevorzugt sein, dass dem Bindemittel dotiertes Silizium beigefügt ist.

Insbesondere ist bevorzugt, dass dem Bindemittel Ethylenglycol zugesetzt ist, vorzugsweise in einer Menge von 0,1 bis 5 Gew.% bezogen auf die Gesamtmenge an Bindemittel.

Auch ist bevorzugt, dass der Anteil an Tannin größer ist als der Anteil an Laktose, vorzugsweise 70 bis 90 Gew.% Tannin beträgt, bezogen auf die Gesamtmenge an Bindemittel.

Bei der Masse zur Herstellung entsprechender Produkte, die aus der Mischung mit dem Bindemittel besteht, ist bevorzugt vorgesehen, dass der zugesetzte Kohlenstoff Graphit und/oder Ruß und/oder Kohlenstofffasermaterial und/oder Carbonnanotubes (CNT) und/oder Graphen und/oder vorverkoktes Pech, Bitumen oder Phenolharz ist.

Die entsprechende Masse ist vorzugsweise mit dem Bindemittel gemäß obiger Definitionen vermengt.

Vorzugsweise ist vorgesehen, dass der Masse ein Anteil von bis zu 50 Gew.% Bindemittel zugesetzt ist, vorzugsweise 0,5 bis 20 Gew.%, besonders bevorzugt 2 bis 8 Gew.%, bezogen auf die Gesamtmasse.

Erfindungsgemäß ist ferner ein Formkörper, der aus einer entsprechenden Masse mit Bindemittel besteht.

Gegenstand der Erfindung ist ferner ein Verfahren zur Herstellung von feuerfesten oder hochtemperaturfesten Formkörpern oder Massen aus einem hochtemperaturfesten oder feuerfesten anorganischen Pulver, Körnern und/oder Granulat mit einem Bindemittel, wobei erfindungsgemäß vorgesehen ist, dass einer anorganischen Feinkörnung von <100 µm mindestens eine anorganische Grobkörnung >100 µm und Kohlenstoff mit einem kombinierten Bindemittel auf Basis von Tannin, Laktose, feinkörnigem Siliziumdioxid und Aluminiumpulver zugegeben werden und - vorzugsweise in einem Mischer - gemischt werden, diese Mischung über ein Urformgebungsverfahren, zum Beispiel Gießen, Pressen, Extrudieren, in ein Erzeugnis überführt wird, welches vor oder während der Anwendung thermisch bei Temperaturen >100 °C behandelt wird, vorzugweise in zwei Verfahrensstufen, nämlich einer ersten Stufe bei bis zu 250 °C und einer zweiten Stufe bei Temperaturen oberhalb 600 °C, vorzugsweise unter Sauerstoffabschluss.

Erfindungsgemäß werden bei diesen Verfahren Massen und/oder Bindemittel verwendet, wie in den Ansprüchen angegeben ist.

Die Erfindung betrifft ein kombiniertes Bindersystem für die Herstellung von feuerfesten, kohlenstoffgebundenen, graphithaltigen Formkörpern und Massen auf Basis von Tannin, Laktose, feinkörnigem SiO2 und Aluminium in Kombination mit mindestens einer feuerfesten Grobkörnung.

Erfindungsgemäß bietet das Bindemittelsystem eine umweltfreundliche Variante an, die erfindungsgemäß auch in Kombination mit anderen, weniger umweltfreundlichen Bindemitteln zu einer Reduzierung von gesundheitsgefährdeten Emissionen beitragen kann.

Erfindungsgemäß kann das kombinierte Bindersystem aus Tannin, Laktose, feinkörnigem SiO₂, Aluminium und phenolhaltiges Pulverharz bestehen.

Erfindungsgemäß wird für die Pressformgebung Ethylenglycol als Lösungsmittel bei der Aufbereitung der Masse in einem Mischer zugesetzt.

Die eingesetzten, anorganischen Körnungen können aus oxidischen, nicht-oxidischen natürlichen oder synthetischen Rohstoffen, Kohlenstoff bzw. metallischen Körnungen bestehen. Die Partikelgrößen der eingesetzten Rohstoffe liegen im Bereich von bis zu 30 mm.

Als oxidische Körnungen können z.B. Calciumoxid, Magnesiumoxid, Dolomit, Chromoxid, Aluminiumoxid, Mullit, Zirkonmullit, Zirkoniumdioxid, Magnesiumaluminatspinell, Bauxit, Yttriumoxid, Titandioxid dienen.

Als nicht-oxidische Körnungen können z.B. Siliziumkarbid, Siliziumnitrid, Bornitrid, Borkarbid und Kohlenstoff dienen.

Erfindungsgemäß dient Graphit und/oder Ruß und/oder Kohlenstofffaser und/oder Carbonnanotubes (CNT) und/oder Graphen und/oder vorverkoktes Pech, Bitumen oder Phenolharz als Kohlenstoffträger.

Dieses Binder-System in Kombination mit mindestens einer anorganischen Grobkörnung eignet sich erfindungsgemäß insbesondere für den konventionellen Schlickerguss, für den Druckschlickerguss, für das Gießen von Vibrationsmassen und selbstfließenden Massen, als Bindemittel bei bildsamen Massen bei der Extrusion, bei der Pressformgebung und speziell für das uniaxiale Pressen und das kaltisostatische Pressen.

Erfindungsgemäß dienen Saccharide z.B. Lactose aus der Lebensmittelindustrie in Kombination mit Polyhydroxyphenole mit ortho-ständigen phenolischen Hydroxygruppen z.B. Tannin aus den sekundären Pflanzeninhaltsstoffen als neues absolut umweltfreundliches Bindemittelsystem in kohlenstoffhaltigen bzw. kohlenstofffreien feuerfesten Gemengen bestehend aus Oxiden, Nicht-Oxiden mit oder ohne Kohlenstoff in Form von Graphit, Graphen oder Russ für die Herstellung von feuerfesten Erzeugnissen.

Lactose wird auch Milchzucker oder Saccharum lactis genannt. Sie stellt ein Disaccharid aus D-Glucose und D-Galaktose dar, das β-1,4-glycosidisch verknüpft ist (4-O-(β-D-Galactopyranosyl-D-Glucopyranose).

Lactose setzt sich aus ihren Stereoisomeren, die α- und β- Form zusammen. Sie kommt somit in verschiedenen Formen vor:
- α-Lactose-Monohydrat
- stabile wasserfreie α-Lactose
- unstabile wasserfreie α-Lactose
- amorphe Lactose
- β-Lactose
- β/α-zusammengesetzte Kristalle

Lactose kommt natürlicherweise in Milch und Milchprodukten vor. Der Anteil an Milchzucker in der Milch beträgt ca. 5 %. Ausgangsprodukt für die Herstellung von Lactose ist die bei der Käseherstellung anfallende Molke, die 4-5 % Milchzucker enthält. Durch Ultrafiltration und Kristallisation erhält man schließlich nach Abfiltrieren, Reinigen und Trocknen das Endprodukt, die Lactose, in unterschiedlichen Reinheiten.

Für die Einteilung der Tannine existieren verschiedene Möglichkeiten. In der vorliegenden Erfindung werden sie wie folgt eingeteilt, in hydrolysierbare Tannine (oder Gallotannine) und in kondensierte Tannine (oder Catechin-Gerbstoffe). Kondensierte Tannine (auch Proanthocyanidin genannt) stellen ein Dimer bzw. ein höheres Oligomer des Flavan-3-ols dar. Hydrolysierbare Tannine können, wie ihr Name schon sagt, in Glucose, mehrwertige Alkohole, Gallussäure oder Ellagsäure hydrolysiert werden.

**Tannin**

| **hydrolysierbare Tannine** | **kondensierte Tannine** |
|---|---|
| Gallotannin | Proanthocyanidin |
| Ellagtannin | Flavan-3-ol (Catechin) |
| polymerisiert | |
| zentrale Polyole über | |
| Hydroxylgruppen | bzw. Flavan-3,5-diole |
| + | ↓ |
| einer oder mehrerer | |
| phenolische Gruppe | Flavonoide |
| (Gallussäure) verestert | Penta- und |
| Hexahydroxyflavane | |
| (z.B. Corilagin) | (z.B. Quebrachotannin) |

Zur Herstellung von Tannin geht man von Rinde oder Holz von tropischen oder subtropischen Holzarten aus. Im Falle des Quebrachotannins handelt es sich um Schinopsis balansae. Die Gewinnung erfolgt über Extraktion aus wässrigen, alkalischen Lösungen. Ein letzter Schritt ist die Sprühtrocknung und das fertige Tannin kommt in Pulverform auf den Markt.

Erfindungsgemäß wird Quebrachotannin -eine kostengünstige Variante- aus der Vielzahl der Tannine bevorzugt. Ein weiterer Grund ist die Aktivität des 5/11

Quebrachotannins, als kondensiertes Tannin, gegenüber Reaktionspartnern, die sich durch die chemische Struktur erklärt.

Im Stand der Technik werden Kombinationen von Tannin und Laktose oder Tannin mit SiO₂ oder Tannin, Laktose und Amine als Bindemittel vorgeschlagen. Erfindungsgemäß führt erst die Kombination von Laktose und Tannin und feinkörnigem SiO₂ zu einem brauchbaren Bindemittel für grobkörnige, kohlenstoffgebundene und insbesondere graphithaltige Feuerfesterzeugnisse, welches allerdings erst mit der Zugabe von Al zu ausreichenden Festigkeiten führt, um einen Einsatz in Feuerfestanwendungen zu ermöglichen. Wenn auch zusätzlich die Porositätsanforderungen im Vordergrund stehen, ist erfindungsgemäß eine geringfügige Zugabe im Bereich bis zu 30% in der Mischung aus Laktose und Tannin (z.B. 70% Laktose und Tannin und 30% Phenolharz) vom phenolhaltigen Pulverharz notwendig.

Das erfindungsgemäße, kombinierte Bindemittelsystem auf der Basis Tannin und Laktose und SiO₂ und Al in Kombination mit einer anorganischen Grobkörnung für kohlenstoffgebundene, graphithaltigen Erzeugnisse in feuerfesten Anwendungen ist im Stand der Technik nicht bekannt.

Die DE 697 30 221 TS betrifft eine aushärtende Klebstoffzusammensetzung auf der Grundlage kondensierter Tannine. Sie findet Anwendung als Klebstoff für die Produktion holzbasierter Materialien, z.B. Spanholzplatten, Faserplatten (MDF), Sperrholz, Formplatten, Laminaten, in der Holzindustrie.

In der DE 44 06 825 A1 wird die Zugabe von SiO₂ als Härter in verschiedenen Konzentrationsschritten mit unterschiedlichen Tannin-Arten erläutert. Dieses Binde- bzw. Klebemittel ist auch für die holzverarbeitende Industrie von Belang.

In der DE 103 04 748 A1 sind Massen aus Bindemittel, Füll- und Zusatzstoffen beschrieben, die bei Umgebungstemperatur spritzbar und in der Wärme, oberhalb 150°C, aushärtbar sind. Sie beinhalten Lackschlämme oder Pulverlacke, die unteranderem mit Tannin versetzt werden, um eine bessere Handhabung zu 6/11
erzielen. Diese dienen beim Kraftfahrzeug- und Maschinenbau als Beschichtungsmassen oder schalldämmende Massen.

Die DE 696 06 052 T2 bezieht sich auf vernetzte bio-basierte Materialien zur Herstellung von Leiterplatten. Diese können verschiedene Ursprünge haben, z.B. Lignin, auch modifizierte, Pflanzenöle, Baumharze, Tannine, Polysaccharidharze, Cellulosen, auch modifizierte.

Die Offenlegungsschrift DE 1470914 beschreibt ein Verfahren zur Herstellung hitzehärtbarer (etwa 150°C) Massen für feinkörnige, graphitfreie Gießformen zum Formgießen von metallischen Schmelzen in Gießereien. Diese bestehen aus Kohlenhydraten, einem sulphatiertem Tannin, Amine und Vernetzunsmittel, z.B. Hexamethylentetramin (HEXA), die zur Reaktion gebracht werden. Sie werden beim Formguss in Gießereien angewendet. Auch bei der Herstellung von Kunststoffgegenständen, gesinterter oder poröser Metallprodukte, geschäumter Wärmeisolationsmaterial, Kernen und Gießformen zusammen mit Ton oder keramischen Bindemitteln kann diese Masse Anwendung finden.

In der DE 2050501 B geht es um Vernetzungs- und Harzbildungsmittel für Formsand. Sie enthalten reduzierende Zucker, Phosphorsäure, mehrwertige Phenole und Wasser.

In der WO 2010/037699 A2 geht es um die Pyrolyse von reinen Kohlenhydraten ohne anorganischen Fein- oder Grobkörnungen, die mit Hilfe von zugesetzten SiO2 nicht aufschäumen, und so ein graphit-haltiger Rückstand entsteht, der weiter eingesetzt werden kann.

Die DE 2249103 A beschreibt ein Verfahren zur Herstellung feuerfester und flammfester harzartiger Schaumstoffe mit Hilfe von reduzierenden Zuckern, Phosphorsäure, Flüssigmachern, mehrwertigen Phenolen, organischem Polyisocyanaten, Pulvern eines mehrwertigen Metalls und einem zusätzlichen Härter.

In der DE 2759132 A1 werden reduzierende Zucker, flüssige Harzbilder, Phosphorsäure, Verflüssiger, mehrwertige Phenole und ein Expandier- oder Treibmittel, das Gas freisetzt, verwendet, um ein Überzugsmaterial herzustellen. Dieser Überzug bildet bei erhöhter Hitzeeinwirkung eine thermische isolierende Schaumbarriere, bei längerer Hitzeeinwirkung bis hin zu einem porösen, nichtbrennbaren Koks oder Rückstand, der nicht entflammbar ist.

Die EP 2 740 768 A1 stellt ein Verfahren dar, Tannin enthaltende Mischungen unter Hitze und Druck zu pressen. Es sollen hiermit kunststoffähnliche Formen und holzenthaltene verklebte Spanplatten ohne Erdölerzeugnisse hergestellt werden. Hierfür werden pflanzliches Material, Polycarboxylsäure und Saccharide gemischt und bei Temperaturen bis max. 250 °C geschmolzen.

Für die Anwender von feuerfesten Formkörpern bei hohen Einsatztemperaturen, insbesondere oberhalb 1500 °C, sind verbesserte mechanische, thermische und chemische Eigenschaften (Kriechbeständigkeit, Thermoschock- und Korrosionsbeständigkeit) erstrebenswert, um die Standzeit der hochbeanspruchten Feuerfesterzeugnisse zu erhöhen. Über die Kombination von anorganischen Grob- und Feinkörnungen mit Graphit, Tannin und Laktose in feuerfesten Erzeugnissen werden erfindungsgemäß einerseits bei der Urformgebung Pressen, Giesen, Extrudieren hohe Grünfestigkeiten erzielt, die den absolut umweltfreundlichen feuerfesten Erzeugnissen sehr gute mechanische Eigenschaften verleihen.

Erfindungsgemäß wird den beiden Bindemitteln Tannin und Lactose feinkörniges SiO₂ kleiner 10 µm zugegeben, um die Volumenexpansion während der thermischen Behandlung zu entschärfen, und Aluminiumpulver kleiner 200 µm, um Kaltdruckfestigkeiten größer 35 MPa nach einer Temperaturbehandlung oberhalb 600° unter Sauerstoffausschluss (Verkokungsbedingungen von kohlenstoffgebundenen Feuerfesterzeugnissen) zu erreichen.

Erfindungsgemäß wird dem Bindemittelsystem bestehend aus Laktose, Tannin, SiO₂ und Aluminium, metallisches Silizium und/oder halbleitendes Silizium - z.B. mit Phosphor-Dotierung- beigefügt, um den Restkohlenstoffgehalt zu erhöhen.

Zur Optimierung der Oxidationsbeständigkeit des neuentwickelten Bindemittelsystems können erfindungsgemäß weitere feinkörnige Additive, wie z.B. Mg oder Karbide, z.B. SiC, B₄C, TiC oder Nitride, z.B. Si₃N₄, AlN, TiN oder Boride, z.B. BN, TiB₂ zugesetzt werden.

Die Erfindung soll an nachfolgenden Ausführungsbeispielen näher erläutert werden.

Beispiel 1 und 2 sind Mischungen für kohlenstoffgebundene, graphithaltige MgO-Steine.

Nach einer Mischung in einem Eirich-Intensivmischer der Oxide mit dem Bindemittelsystem folgen uniaxiales Pressen für die Steinformate eine Temperung bei Temperaturen kleiner 250 °C und anschließend eine Verkokung bei Temperaturen größer 800 °C.

Im verkokten Zustand erreichen Zylinderproben aus den Stein-Erzeugnissen Kaltdruckfestigkeiten größer 40 MPa und Porositäten kleiner 14% und Biegestäbe aus den Stopfengeometrien Biegefestigkeiten größer 3 MPa und Porositäten kleiner 18%.

Sämtliche Prozentangaben beziehen sich auf Gewichtsprozent, und zwar bezogen auf die Gesamtmasse an Oxid, die jeweils 100 % beträgt.

### Beispiele

**Beispiel 1**

| Rohstoffe | % |
|---|---|
| Oxid | |
| Sintermagnesia < 0,09 mm | 23 |
| Sintermagnesia 0-1 mm | 20 |
| Sintermagnesia 1-3 mm | 37 |
| Sintermagnesia 3-6 | 20 |
| | |
| Graphit | 3,6 |
| Bindemittelsystem | |
| Tannin | 3,4 |
| Laktose | 0,75 |
| SiO₂ | 0,23 |
| Aluminium | 2,0 |
| Hexa | 0,5 |
| Ethylenglycol | 1,5 |

**Beispiel 2**

| Rohstoffe | % |
|---|---|
| Oxid | |
| Sintermagnesia < 0,09 mm | 23 |
| Sintermagnesia 0-1 mm | 20 |
| Sintermagnesia 1-3 mm | 37 |
| Sintermagnesia 3-6 | 20 |
| | |
| Graphit | 3,6 |
| Bindemittelsystem | |
| Tannin | 3,4 |
| Laktose | 0,75 |
| SiO₂ | 0,23 |
| Aluminium | 2,0 |
| Hexa | 0,5 |
| Ethylenglycol | 1,5 |
| Phenolharz (Pullver) | 1,0 |

## Patentansprüche

1. Masse zur Herstellung von hochtemperaturfesten oder feuerfesten Formkörpern, enthaltend ein Gemenge aus:
- einem feuerfesten oder hochtemperaturfesten anorganischen Pulver, Körnern und/oder Granulat,
- einem Bindemittel,
**dadurch gekennzeichnet, dass** das Bindemittel eine Kombination von Tannin, Laktose, feinkörnigem Siliziumdioxid und Aluminiumpulver enthält.

2. Masse nach Anspruch 1, **dadurch gekennzeichnet, dass** das Gemenge eine rieselfähige Masse oder ein Pulver aus Kohlenstoff enthält.

3. Bindemittel zur Herstellung feuerfester Massen oder Formkörper, insbesondere zur Herstellung von Massen nach einem der Ansprüche 1 oder 2, **dadurch gekennzeichnet, dass** das Bindemittel eine Kombination von Tannin, Laktose, feinkörnigem Siliziumdioxid und Aluminiumpulver enthält.

4. Bindemittel nach Anspruch 3, **dadurch gekennzeichnet, dass** das Verhältnis Laktose zu Tannin zwischen 0,1 und 0,3 liegt.

5. Bindemittel nach Anspruch 3, **dadurch gekennzeichnet, dass** das feinkörnige Siliziumdioxid eine Korngröße kleiner 50 µm, vorzugsweise kleiner 1 µm, hat und das Aluminiumpulver eine Korngröße kleiner 200 µm hat.

6. Bindemittel nach Anspruch 3, **dadurch gekennzeichnet, dass** dem Bindemittel Phenolharz in Pulverform bis zu 30 Gew.% bezogen auf die Mischung aus Laktose und Tannin zugegeben ist.

7. Bindemittel nach Anspruch 3, **dadurch gekennzeichnet, dass** dem Bindemittel weitere feinkörnige Additive zugesetzt sind, nämlich Magnesium oder Karbide, insbesondere SiC, B₄C, TiC oder Nitride, insbesondere Si₃N₄, AIN, TiN oder Boride, insbesondere BN, TiB₂.

8. Bindemittel nach Anspruch 3, **dadurch gekennzeichnet, dass** dem Bindemittel dotiertes Silizium beigefügt ist.

9. Bindemittel nach Anspruch 3, **dadurch gekennzeichnet, dass** dem Bindemittel Ethylenglykol zugesetzt ist, vorzugsweise in einer Menge von 0,1 bis 5 Gew.%.

10. Bindemittel nach Anspruch 3, **dadurch gekennzeichnet, dass** der Anteil an Tannin größer ist als der Anteil an Laktose, vorzugsweise 70 bis 90 Gew.% Tannin beträgt.

11. Masse nach Anspruch 2, insbesondere mit Bindemittel gemäß einem der Ansprüche 3 bis 10,
**dadurch gekennzeichnet, dass** der zugesetzte Kohlenstoff Graphit und/oder Ruß und/oder Kohlenstofffasermaterial und/oder Carbonnanotubes (CNT) und/oder Graphen und/oder vorverkoktes Pech, Bitumen oder Phenolharz ist.

12. Masse nach einem der Ansprüche 1 oder 2 mit Bindemittel gemäß einem der Ansprüche 4 bis 10.

13. Masse nach einem der Ansprüche 1 oder 2,
**dadurch gekennzeichnet, dass** der Masse ein Anteil von bis zu 50 Gew.% Bindemittel zugesetzt ist, vorzugsweise 0,5 bis 20 Gew.%, besonders bevorzugt 2 bis 8 Gew.%.

14. Formkörper bestehend aus einer Masse gemäß einem der Ansprüche 1, 2, 11, 12 und 13 mit Bindemittel gemäß einem der Ansprüche 3 bis 10.

15. Verfahren zur Herstellung von feuerfesten oder hochtemperaturfesten Formkörpern oder Massen aus einem hochtemperaturfesten oder feuerfesten anorganischen Pulver, Körnern und/oder Granulat und einem Bindemittel, **dadurch gekennzeichnet, dass** einer anorganischen Feinkörnung von < 100 µm mindestens eine anorganische Grobkörnung > 100 µm und Kohlenstoff und ein kombiniertes Bindemittel auf Basis von Tannin, Laktose, feinkörnigem Siliziumdioxid und Aluminiumpulver zugegeben wird und - vorzugsweise in einem Mischer - gemischt wird, diese Mischung über ein Urformgebungsverfahren, zum Beispiel Gießen, Pressen, Extrudieren in ein Erzeugnis überführt wird, welches vor oder während der Anwendung thermisch bei Temperaturen größer 100 °C behandelt wird, vorzugsweise in zwei Verfahrensstufen, nämlich einer ersten Stufe bei bis zu 250 °C und in einer zweiten Stufe bei Temperaturen oberhalb 600 °C, vorzugsweise unter Sauerstoffausschluss.

16. Verfahren nach Anspruch 15, unter Verwendung von Massen und/oder Bindemitteln gemäß einem der Ansprüche 2 bis 13.

## Claims

1. A mass for the production of high temperature-resistant or refractory shaped bodies, containing a mixture of:
- a refractory or high temperature-resistant inorganic powder, grains and/or granules,
- a binder,
**characterized by that** the binder contains a combination of tannin, lactose, fine-grain silicon dioxide, and aluminum powder.

2. The mass according to claim 1, **characterized by that** the mixture contains a free-flowing mass or a powder of carbon.

3. A binder for the production of refractory masses or shaped bodies, in particular for the production of masses according to one of claims 1 or 2, **characterized by that** the binder contains a combination of tannin, lactose, fine-grain silicon dioxide, and aluminum powder.

4. The binder according to claim 3, **characterized by that** the ratio of lactose to tannin is between 0.1 and 0.3.

5. The binder according to claim 3, **characterized by that** the fine-grain silicon dioxide has a grain size less than 50 µm, preferably less than 1 µm, and the aluminum powder has a grain size less than 200 µm.

6. The binder according to claim 3, **characterized by that** to the binder is added phenolic resin in powder form up to 30 wt.-% with reference to the mixture of lactose and tannin.

7. The binder according to claim 3, **characterized by that** to the binder are added further fine-grain additives, namely magnesium or carbides, in particular SiC, B₄C, TiC or nitrides, in particular Si₃N₄, AIN, TiN or borides, in particular BN, TiB₂.

8. The binder according to claim 3, **characterized by that** to the binder is added doped silicon.

9. The binder according to claim 3, **characterized by that** to the binder is added ethylene glycol, preferably in an amount of 0.1 to 5 wt.-%.

10. The binder according to claim 3, **characterized by that** the content of tannin is larger than the content of lactose, preferably is 70 to 90 wt.-% tannin.

11. The mass according to claim 2, in particular with a binder according to one of claims 3 to 10, **characterized by that** the added carbon is graphite and/or soot and/or carbon fiber material and/or carbon nanotubes (CNT) and/or graphene and/or pre-coked pitch, bitumen, or phenolic resin.

12. The mass according to one of claims 1 or 2 with a binder according to one of claims 4 to 10.

13. The mass according to one of claims 1 or 2, **characterized by that** to the mass is added a content of up to 50 wt.-% binder, preferably 0.5 to 20 wt.-%, particularly preferably 2 to 8 wt.-%.

14. A shaped body consisting of a mass according to one of claims 1, 2, 11, 12 and 13 with a binder according to one of claims 3 to 10.

15. A method for the production of refractory or high temperature-resistant shaped bodies or masses of a high temperature-resistant or refractory inorganic powder, grains and/or granules and a binder, **characterized by that** to an inorganic fine-grain material of < 100 µm, at least one inorganic coarse-grain material > 100 µm and carbon and a combined binder based on tannin, lactose, fine-grain silicon dioxide, and aluminum powder is added and is mixed - preferably in a mixer -, that this mixture is transferred through a primary shaping process, for instance, casting, pressing, extruding, into a product, which before or during the application is thermally treated at temperatures higher than 100 °C, preferably in two process steps, namely a first step at temperatures up to 250 °C and in a second step at temperatures above 600 °C, preferably under exclusion of oxygen.

16. The method according to claim 15, using masses and/or binders according to one of claims 2 to 13.

## Revendications

1. Produit non façonné pour la production de produits façonnés résistant à des températures élevées ou réfractaires, contenant un mélange en:
- une poudre inorganique réfractaire ou résistant à des températures élevées, des grains et/ou du granulat,
- un liant,
**caractérisé en ce que** le liant contient une combinaison de tanin, lactose, dioxyde de silicium à grains fins, et poudre d'aluminium.

2. Produit non façonné selon la revendication 1, **caractérisé en ce que** le mélange contient un produit non façonné pouvant couler ou une poudre de carbone.

3. Liant pour la production de produits réfractaires non façonnés ou façonnés, en particulier pour la production de produits non façonnés selon une des revendications 1 ou 2, **caractérisé en ce que** le liant contient une combinaison de tanin, lactose, dioxyde de silicium à grains fins, et poudre d'aluminium.

4. Liant selon la revendication 3, **caractérisé en ce que** le rapport de lactose à tanin est entre 0,1 et 0,3.

5. Liant selon la revendication 3, **caractérisé en ce que** le dioxyde de silicium à grains fins a une taille de grain inférieure à 50 µm, de préférence inférieure à 1 µm, et la poudre d'aluminium a une taille de grain inférieure à 200 µm.

6. Liant selon la revendication 3, **caractérisé en ce qu'**au liant est ajoutée de résine phénolique en forme de poudre jusqu'à 30 % en poids par rapport au mélange de lactose et tanin.

7. Liant selon la revendication 3, **caractérisé en ce qu'**au liant sont ajoutés d'autres additifs à grains fins, c'est-à-dire du magnésium ou des carbides, en particulier SiC, B₄C, TiC ou des nitrides, en particulier Si₃N₄, AIN, TiN ou des borides, en particulier BN, TiB₂.

8. Liant selon la revendication 3, **caractérisé en ce qu'**au liant est ajouté du silicium doté.

9. Liant selon la revendication 3, **caractérisé en ce qu'**au liant est ajouté de l'éthylène glycol, de préférence dans une quantité allant de 0,1 à 5 % en poids.

10. Liant selon la revendication 3, **caractérisé en ce que** la proportion de tanin est supérieure à la proportion de lactose, de préférence est de 70 à 90 % en poids tanin.

11. Produit non façonné selon la revendication 2, en particulier avec un liant selon une des revendications 3 à 10, **caractérisé en ce que** le carbone ajouté est du graphite et/ou de la suie et/ou du matériau de fibres de carbone et/ou des nanotubes de carbone (CNT) et/ou du graphène et/ou du brai précoké, du bitume, ou de la résine phénolique.

12. Produit non façonné selon une des revendications 1 ou 2 avec un liant selon une des revendications 4 à 10.

13. Produit non façonné selon une des revendications 1 ou 2, **caractérisé en ce qu'**au produit non façonné est ajouté une quantité de jusqu'à 50 % en poids du liant, de préférence 0,5 à 20 % en poids, de préférence particulière 2 à 8 % en poids.

14. Produit façonné consistant en un produit non façonné selon une des revendications 1, 2, 11, 12 et 13 avec un liant selon une des revendications 3 à 10.

15. Procédé pour la production de produits façonnés réfractaires ou résistant à des températures élevées ou de produits non façonnés en une poudre inorganique résistant à des températures élevées ou réfractaire, de graines et/ou de granulat et d'un liant, **caractérisé en ce que** à un matériau inorganique à grains fins de < 100 µm, au moins un matériau inorganique à grains gros > 100 µm et du carbone et liant combiné à base de tanin, lactose, dioxyde de silicium à grains fins, et poudre d'aluminium est ajouté et est mélangé - de préférence dans un mélangeur -, que ce mélange est transféré par l'intermédiaire d'un procédé de façonnage primaire, par exemple, coulée, pressage, extrusion, dans un produit, qui avant ou pendant l'application est traité thermiquement à des températures supérieures à 100 °C, de préférence dans deux étapes du procédé, c'est-à-dire une première étape à des températures jusqu'à 250 °C et une deuxième étape à des températures supérieures à 600 °C, de préférence sous exclusion de l'oxygène.

16. Procédé selon la revendication 15, utilisant des produits non façonnés et/ou des liants selon une des revendications 2 à 13.
